(19) **Europäisches Patentamt European Patent Office Office européen des brevets**

(11) **EP 2 502 700 B1**

(12) **FASCICULE DE BREVET EUROPEEN**

(45) Date de publication et mention de la délivrance du brevet:
**24.07.2013 Bulletin 2013/30**

(51) Int Cl.:
***B23Q 11/10*** *(2006.01)*     ***B23Q 17/00*** *(2006.01)*

(21) Numéro de dépôt: **12158675.4**

(22) Date de dépôt: **08.03.2012**

(54) **Procédé de commande d'un dispositif d'arrosage pour machine d'usinage**

Steuerverfahren einer Verspritzungsvorrichtung für eine Werkzeugmaschine

Method for controlling a jetting device for a machining tool.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2011 FR 1152424**

(43) Date de publication de la demande:
**26.09.2012 Bulletin 2012/39**

(73) Titulaire: **Messier-Bugatti-Dowty**
**78140 Velizy Villacoublay (FR)**

(72) Inventeurs:
• **Clausmann, Denis**
**67120 Dorlisheim (FR)**
• **Augelmann, Laurent**
**68750 Bergheim (FR)**
• **Kehren, Claude**
**67490 Dettwiller (FR)**
• **Joubert, Xavier**
**67560 Rosheim (FR)**

(74) Mandataire: **Parzy, Benjamin Alain et al**
**Cabinet Boettcher**
**16, rue Médéric**
**75017 Paris (FR)**

(56) Documents cités:
**JP-A- 62 130 149     US-A1- 2004 118 457**

EP 2 502 700 B1

**Description**

L'invention concerne le domaine de l'arrosage d'outil de coupe pour machine d'usinage dotée d'un tel outil. Il est courant d'utiliser des dispositifs d'arrosage pour lubrifier et refroidir les outils de coupe des machines d'usinage, ce qui limite l'usure des outils et réduit le risque de casse et d'arrêt machine. Un tel dispositif est décrit au document brevet JP62130149. L'apport de flux de fluide d'usinage dans la région de contact entre la pièce usinée et l'outil permet de réduire les frottements et de dissiper la chaleur produite dans le flux de fluide d'arrosage. Malgré l'usage d'un tel dispositif d'arrosage, on a toujours des arrêts de machine pour cause de bourrage de copeaux, d'usure ou de casse d'outil.

OBJET DE L'INVENTION

Un objet de l'invention est de fournir une solution permettant de réduire le temps d'arrêt de la machine, d'améliorer les conditions de coupes ainsi que la durée de vie des outils.

RESUME DE L'INVENTION

En vue de la réalisation de ce but, on propose un procédé de commande d'un dispositif d'arrosage d'outil de coupe pour machine d'usinage dotée d'un tel outil. Le dispositif d'arrosage comporte :

- une réserve de fluide d'usinage ;
- une pompe reliée à la réserve ;
- un moteur d'entraînement de la pompe ;
- une buse d'arrosage de l'outil ;
- au moins une conduite de transfert de fluide d'usinage reliant la pompe à une entrée de la buse.

En outre le procédé comporte les étapes de :

- commander le moteur de la pompe de manière que la pompe alimente la buse avec un débit de fluide d'usinage constant D1 et égal à une première consigne de débit ;
- mesurer un paramètre P représentatif d'une pression de sortie du fluide au niveau de la buse ; et
- comparer une pression de sortie estimée à l'aide du paramètre P à un premier seuil de pression prédéterminé Ps1, et commander le moteur de la pompe de manière à augmenter le débit de fluide D1 fourni par la pompe si la pression de sortie estimée Pestim descend sous le premier seuil de pression Ps1.

Pour la compréhension de l'invention on considère que le débit de fluide est constant dès lors qu'il est compris entre +/- 5% de la valeur de débit prédéterminée.
Ainsi, si à l'aide dudit paramètre mesuré P représentatif de la pression du fluide courante D1 on constate que cette pression de fluide courante D1 passe en dessous d'un premier seuil de pression prédéterminé Ps1 alors on commande le moteur de la pompe de manière à augmenter le débit. L'augmentation de ce débit a pour but de compenser la chute de pression qui implique une chute de la force d'impact du fluide d'arrosage sur le copeau d'usinage.
Le paramètre de pression de l'alimentation de la buse est important car il détermine la force d'impact en sortie de buse et par conséquent favorise la casse de la liaison du copeau vis-à-vis de la pièce usinée. En maîtrisant la force d'impact on réduit l'usure et la chauffe de l'outil ainsi que le bourrage d'outil lié à des copeaux de trop grande longueur.
Le procédé de commande selon l'invention permet donc de maintenir une capacité d'arrachage et de casse de copeaux produits lors de l'usinage.
Grâce au procédé selon l'invention on constate que la longueur statistique moyenne des copeaux est généralement réduite par rapport aux cas où l'on n'utilise pas le procédé pour l'arrosage de l'outil de coupe.
On constate qu'en arrachant des copeaux par l'impact de fluide d'arrosage et en réduisant la longueur statistique moyenne des copeaux :

- le copeau a moins tendance à s'enrouler autour de l'outil et du porte outil et l'on réduit le nombre et la durée des arrêts machine liés à un bourrage copeau ; et
- le copeau a moins tendance à se rabattre contre la face de coupe de l'outil puisqu'il en est écarté sous l'effet de l'impact de fluide d'arrosage, l'usure de l'outil et son échauffement lors de l'usinage en sont par conséquent réduits.

On notera qu'il est avantageux de commander le moteur pour que la pompe alimente la buse avec un débit constant car cela évite des phénomènes transitoires liés à des variations du débit d'alimentation de la buse, ce qui permet de mieux maîtriser la force d'impact.

BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

- la figure 1 présente le dispositif d'arrosage d'outil selon l'invention avec sa boucle de régulation permettant de le commander selon le procédé de l'invention ;
- la figure 2 est un tableau montrant en fonction des écarts constatés entre la pression courante mesurée P et le premier seuil de pression prédéterminé Ps1 les différentes alarmes générées et les efforts d'impact de jet en sortie de buse généralement constatés (les alarmes et efforts indiqués sont générées grâce à la mise en oeuvre du procédé selon l'invention, en fonction d'un paramètre, en l'occurrence P, représentatif de la pression en sortie de buse) ;

- la figure 3 est un tableau présentant une partie d'une base de données utilisée pour la mise en oeuvre du procédé selon l'invention.

DESCRIPTION DETAILLEE DE L'INVENTION

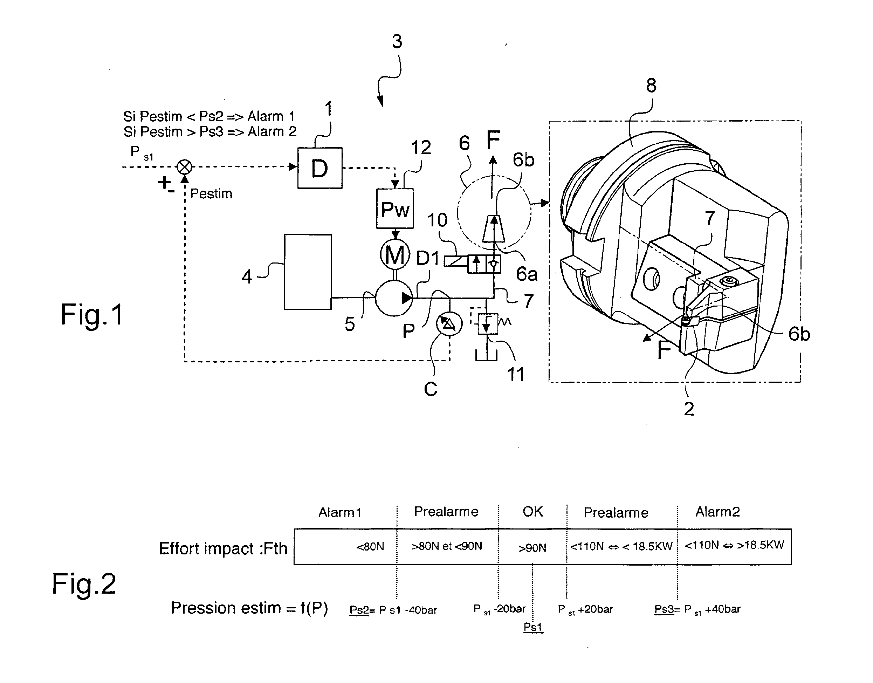

La figure 1 présente une machine d'usinage 3 dotée d'un outil de coupe 2 et d'un dispositif d'arrosage 1 pour la mise en oeuvre du procédé selon l'invention.

Le dispositif d'arrosage 1 comporte une buse d'arrosage 6 détaillée sur le schéma encadré de la figure 1.

La buse est assemblée sur un porte outil 8 de la machine 3 et la machine comporte des actionneurs pour déplacer l'outil et le porte outil selon des commandes programmées. L'outil 2, en l'occurrence une plaquette d'usinage pour réaliser une opération de tournage, est fixée sur le porte outil 8. La sortie 6b de la buse est orientée en direction d'une portion de l'outil de coupe 2 pour l'arroser directement sur sa face de coupe.

La buse 6 est alimentée par la conduite de transfert de fluide 7 qui s'étend au moins en partie à l'intérieur du porte outil 8, cette partie est représentée par une ligne pointillée. Le porte outil 8 comporte un bloc métallique perforé, cette perforation formant une portion de la conduite de transfert de fluide 7 et la buse 6 est assemblée avec ce bloc métallique de manière que son entrée de buse 6a communique avec une sortie de la conduite de transfert de fluide 7 à l'intérieur même du bloc métallique.

Ce mode d'assemblage est résistant puisque la buse est directement assemblée dans le porte outil tout en réduisant la distance entre la sortie de buse 6b et l'outil 2 sans pour autant devoir allonger la conduite de transfert de fluide 7 pour contourner le porte outil. La pression d'alimentation P de la buse 6 peut être importante (généralement de l'ordre de 170 à 240 Bar, cette pression est liée au matériau usiné et aux conditions de coupe mises en oeuvre) et la perte de charge reste réduite car la longueur de la conduite de transfert de fluide 7 est également réduite.

La buse 6 possède une section de passage de fluide rigide et constante à l'usure près. Cette section de passage S est cylindrique annulaire de diamètre D et $S=\pi D^2/4$.

Le dispositif d'arrosage 1 comporte en outre une pompe hydraulique 5 à cylindrée fixe ayant une entrée de fluide reliée à une réserve de fluide d'usinage 4 et une sortie reliée à une entrée 6a de la buse via une conduite de transfert de fluide 7. La pompe 5 est entraînée à rotation par un moteur électrique M. L'alimentation du moteur M est réalisée par un convertisseur de fréquence (variateur) 12 adapté à commander le moteur pour que le débit D1 délivré par la pompe tende vers la consigne de débit D.

Ce convertisseur de fréquence (variateur) 12 est équipé de moyens de mesure de la puissance électrique Pw consommée par le moteur et de la vitesse de rotation de celui-ci. Le moteur M peut être équipé d'un tachymètre afin de mesurer le nombre de cycles de pompe effectués par unité de temps. On peut aussi utiliser une des variables internes mesurées par le convertisseur de fréquence et l'affecter à la mesure de la vitesse de rotation du moteur. Le débit de fluide courant D1 délivré par la pompe à la buse 6 est donné par D1 = Cylindrée de la pompe * ombre de cycles de la pompe (fréquence de rotation).

Le dispositif d'arrosage comporte également un capteur de pression C adapté à générer un signal représentatif d'une pression P de fluide d'usinage entre la pompe 5 et la buse 6. Ce capteur de pression C est placé sur ladite conduite de transfert le plus près possible de l'entrée 6a de la buse 6. Ainsi, on fait préférentiellement en sorte que la longueur de conduite séparant le capteur de pression C de l'entrée 6a de la buse soit inférieure à 1/10ième de la longueur de conduite séparant la pompe 5 du capteur C. Par la mesure de la pression P en amont de la buse 6, au plus prêt de celle-ci, connaissant les pertes de charges induites par la buse calibrée 6, on peut estimer de manière assez précise la pression du fluide Pestim en sortie de buse. Cette estimation est d'autant plus précise que la mesure de P est proche de la buse (cela réduit l'importance, dans l'estimation, des phénomènes parasites liés à la distance entre la mesure et la sortie de buse).

Le dispositif d'arrosage comporte en outre un clapet de distribution à deux positions 10. Dans une position, il interdit le passage de fluide de la pompe 5 vers la buse 6, ce qui évite la vidange du circuit lorsque la pompe est à l'arrêt. Dans l'autre position, le tiroir du clapet 10 met en communication directe la pompe 5 et la buse 6, cette seconde position est celle utilisée durant l'arrosage de l'outil. Enfin le dispositif d'arrosage comporte un limiteur de pression 11 qui est ajusté pour permettre le retour de fluide de la conduite 7 à la bâche en cas de surpression dans le circuit. Ce limiteur de pression 11 constitue une sécurité.

Comme indiqué précédemment, le procédé de commande du dispositif d'arrosage 1 de l'outil de coupe selon l'invention consiste principalement à :

- commander le moteur M de manière que la pompe 5 alimente la buse 6 avec un débit de fluide d'usinage constant D1 et égal à une première consigne de débit D ;
- mesurer le paramètre représentatif P d'une pression de sortie du fluide au niveau de la buse 6 (en l'occurrence ce paramètre P est une pression P courante mesurée dans la conduite 7 entre la pompe et la buse) ; et
- comparer une pression de sortie estimée Pestim, à l'aide du paramètre P mesuré, à un premier seuil de pression prédéterminé Ps1 ; et
- commander le moteur M de manière à augmenter le débit de fluide D1 fourni par la pompe 5 si la pression de sortie estimée descend sous le premier seuil de pression Ps1 (en l'occurrence pour augmenter ce débit D1, on augmente la consigne de débit D et le moteur 5 reste commandé pour suivre cette consigne D modifiée).

En outre, comme on le voit sur la boucle de régulation de la figure 1, le procédé comporte une étape de comparer la pression de sortie estimée Pestim à l'aide du paramètre P à un deuxième seuil de pression prédéterminé Ps2. Si la pression de sortie estimée Pestim descend en dessous du deuxième seuil de pression prédéterminé Ps2 alors on génère une alarme d'indication de buse usée Alarm1.

Etant donné que la buse 6 possède une section de passage de fluide constante, à l'usure près, le fait de surveiller (via la pression P) la pression de fluide estimée Pestim en sortie de buse (alors que la buse est alimentée en débit constant D1) permet de détecter l'usure de la buse 6.

Si l'on constate que la pression de sortie de buse Pestim tombe trop bas, en l'occurrence sous le deuxième seuil Ps2 de pression prédéterminé, cela signifie que la section minimale de passage de fluide S au niveau de la buse s'est agrandie du fait de l'usure de buse 6, ou d'une éventuelle fuite sur le circuit (fuite via un de ses composants par exemple), conduisant à une diminution de la pression de fluide en sortie 6a de buse et à la réduction de l'effort d'impact F du fluide sur le copeau d'usinage.

Grâce à cette alarme de buse usée Alarm 1, l'opérateur estime l'usure de la buse 6 sans devoir stopper le dispositif d'arrosage 1.

Une fois l'alarme d'indication de buse usée Alarm1 générée, l'opérateur peut intervenir pour vérifier l'état réel de la buse 6. Eventuellement la buse peut être remplacée par une buse non usée apte à générer la force d'impact F souhaitée avec le débit de fluide nominal.

Comme on le voit sur la figure 1, le procédé comporte une autre étape de comparaison de la pression de sortie estimée Pestim à un troisième seuil de pression prédéterminé Ps3.

Si la pression de sortie estimée Pestim passe au dessus du troisième seuil de pression prédéterminé Ps3 alors on génère une alarme d'indication d'obstruction de buse Alarm2. Eventuellement cette alarme Alarm2 peut être accompagnée d'une commande d'arrêt moteur pour prévenir une destruction du dispositif.

La surveillance (via la pression estimée Pestim) de pression de fluide en sortie de buse alors qu'elle est alimentée en débit constant D1 permet de détecter une réduction de la section de passage de fluide S au niveau de la buse 6 ou d'une façon globale n'importe où dans le circuit. Ainsi lorsque la pression estimée de sortie de buse augmente au dessus du troisième seuil prédéterminé Ps3, on sait qu'il y a bouchage au moins partiel de la buse par exemple par un copeau et on sait que la force d'impact F en sortie de buse est certainement dégradée.

L'opérateur prévenu par l'alarme Alarm2 peut intervenir, déboucher la buse, pour que l'effort d'impact de fluide d'arrosage F sur le copeau revienne à un niveau nominal souhaité.

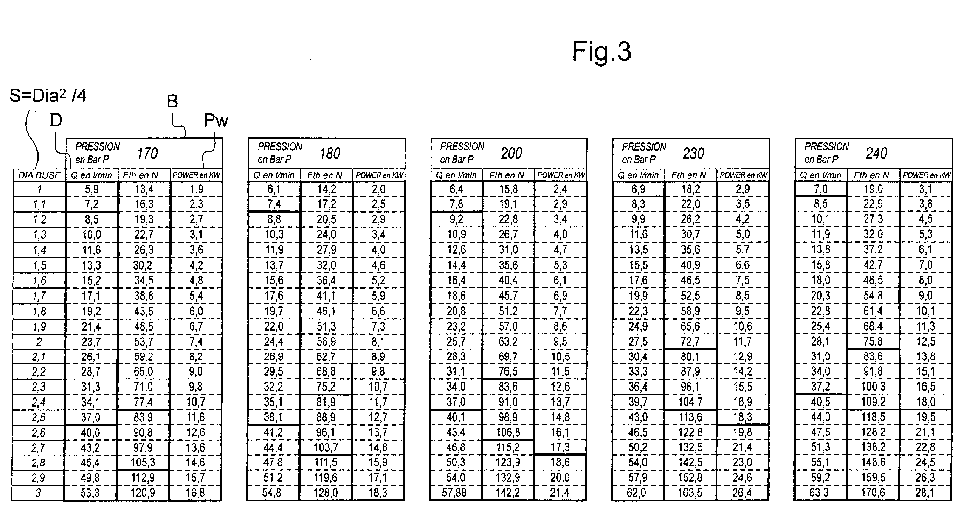

Avantageusement, le procédé comporte une étape de détermination de la première consigne de débit D à l'aide d'une base de données B visible sur la figure 3.

Cette base B recense pour plusieurs sections de passage S de buse données des couples de valeurs de pression P et de débit Q de fluide d'arrosage nécessaires pour générer un niveau théorique d'effort d'impact Fth en sortie de la buse 6.

L'usage d'une telle base B permet d'améliorer la vitesse de commande du dispositif d'arrosage (le temps de calcul est réduit car une partie des valeurs de consignes sont déjà calculées et enregistrées dans la base B).

Il existe plusieurs manières de générer la base de données B. Une première manière, relativement approximative, est par le calcul théorique. Une seconde manière, plus précise, est par des essais de comportement du dispositif d'arrosage et par la mesure de ces comportements.

Selon la première manière on peut générer la base de données B avec les formules suivantes :

(1)

$$(1) \quad Q = 0.454*Dia^2*P^{1/2}$$

où

- Q, en 1/min, est la valeur de débit ;
- 0.454 est un coefficient déterminé en fonction de la viscosité du fluide d'arrosage et des pertes de charges du dispositif d'arrosage ;
- Dia, en mm, est le diamètre de la section de passage de fluide au niveau de la buse ;
- P, en Bar, est la pression d'alimentation théorique nécessaire pour générer un débit Q avec une buse donnée de section de passage S= n*Dia²/4.

(2)

$$(2) \quad Fth=0.079*P*Dia^2$$

où

- 0.079 est une constante propre au dispositif d'arrosage et au type de buse utilisé ;
- Fth, en Newton, est la force d'impact théorique du jet en sortie de la buse de section de passage cylindrique de diamètre Dia lorsque alimentée en fluide d'arrosage à une pression P en Bar.

(3)

$$(3) \quad Pw = P*Q/(600*0.9)$$

où

- Pw, en KW, est la puissance théorique d'alimentation du moteur pour délivrer en entrée de buse un flux de liquide d'arrosage à une pression P et un débit Q ; et

- 0.9 est un coefficient dépendant du dispositif d'arrosage.

Selon la seconde manière, plus précise, la base de données B est générée lors d'essais successifs du dispositif d'arrosage 1 d'outil de coupe. A chaque essai on monte une buse d'un diamètre donné et on alimente cette buse avec différentes pressions P et différents débits Q.

Pour chaque buse de diamètre Dia donné dès que l'on est en régime constant, on enregistre les valeurs de pression d'alimentation P, de débit d'alimentation Q, et de puissance Pw consommée par le moteur M et on estime / calcule une valeur de force d'impact théorique Fth en sortie de la buse.

Ainsi la base B comporte pour chaque valeur de débit Q enregistrée, une section de passage de buse S correspondante (en l'occurrence un diamètre Dia définissant S de façon univoque), une valeur de pression mesurée P correspondante et une puissance consommée Pw.

L'effort d'impact F obtenu en sortie de buse est ainsi exprimé via un effort d'impact théorique Fth en sortie de buse qui est fonction de la section S de passage de fluide de la buse, du débit D et de la pression d'alimentation P de cette buse en fluide d'arrosage.

Grâce à cette base B, en fonction du débit courant D1 mesuré et de la pression P d'alimentation courante mesurée on peut évaluer la section courante S de la buse.

Ainsi, on peut estimer l'évolution dans le temps de la section S et l'état d'usure de la buse.

Par ailleurs, connaissant cette section de passage courante S et connaissant l'effort d'impact théorique souhaité Fth (l'effort d'impact souhaité est donné par le programmeur en fonction de la section de copeau à arracher et en fonction du matériau usiné) on peut déterminer le couple de valeurs de pression P et de débit théorique Q à appliquer sur la buse pour obtenir cet effort d'impact théorique souhaité Fth.

Une fois que l'on a identifié dans la base la valeur théorique de débit Q, on fixe la première consigne de débit D en fonction de Q. Par exemple, on peut utiliser la relation D=Q.

De même, en fonction de la valeur de pression P du couple P et Q obtenu dans la base B on fixe selon des règles prédéfinies les premier, deuxième et troisièmes seuils de pression Ps1, Ps2, Ps3.

Puis on commande la pompe 5 via son moteur M pour que le débit D soit le plus proche possible de cette consigne D et on compare la pression estimée courante Pestim, déduite par mesure de pression courante P entre la pompe et la buse, avec chacun de ces seuils Ps1, Ps2, Ps3.

Si la pression estimée Pestim < Ps1, alors on augmente la valeur de la consigne de débit D, ce qui permet de retrouver un effort F proche de l'effort nominal requis Fth.

Si Pestim < Ps2, alors on génère une alarme de buse usée Alarm1. En l'occurrence, dans l'exemple de la figure 2, on a choisi Ps2=Ps1 - 40 Bar.

Si Pestim > Ps3, alors on génère une alarme d'obturation de buse Alarm2. En l'occurrence, dans l'exemple de la figure 2, Ps3= Ps1 + 40 Bar.

Préférentiellement, pour déterminer l'augmentation du débit de fluide à appliquer D lorsque la pression de sortie estimée Pestim< Ps1 :

a) on évalue une section minimale courante S de passage de fluide au travers de la buse à l'aide :

- de la base de données B ; et
- en fonction de valeurs estimées de débit courant D1 et de la pression courante en sortie de buse estimée Pestim ; puis (à l'aide de la base B) ;

b) on détermine, en fonction de cette section minimale courante S évaluée, un couple idéal de valeurs P et Q devant être fournis par la pompe 5 pour générer un niveau théorique d'effort d'impact Fth de jet supérieur au seuil d'impact minimum prédéterminé ; puis

c) on affecte à la première consigne de débit D une nouvelle valeur fonction de la valeur de débit Q de ce couple idéal.

Idéalement, l'un au moins des premier, deuxième et troisième seuils de pressions prédéterminés Ps1, Ps2, Ps3 est déterminé à l'aide du couple idéal de valeurs de pression P et de débit Q issu de la base de données B.

Comme indiqué précédemment, étant donné que la pompe à une valeur de cylindrée constante, on peut évaluer le débit de fluide d'usinage D1 délivré avec un simple tachymètre mesurant la vitesse d'entraînement de la pompe.

Dans un mode de réalisation particulier, on peut estimer la pression de sortie Pestim au niveau de la buse en mesurant un paramètre Pw représentatif de la puissance mécanique consommée par la pompe pour alimenter la buse avec le débit constant D1.

L'estimation de la pression de sortie du fluide Pestim grâce à la puissance mécanique consommée par la pompe et au débit constant fournit une alternative à une mesure de pression directe par capteur de pression. On peut ainsi éviter des pertes de charges induites par l'implantation d'un capteur de pression entre la pompe et la buse.

Dans la pratique, l'estimation de la pression peut aussi être réalisée simultanément par un capteur de pression C implanté entre la pompe et la buse et par une mesure de la puissance électrique consommée par le moteur corrélée avec la vitesse de rotation du moteur.

L'estimation de la pression en sortie de buse Pestim par la puissance consommée par le moteur est particulièrement avantageuse lorsque l'on cherche à détecter l'augmentation de pression pour générer l'alarme buse obstruée (Alarm2). En effet, la détection d'augmentation de pression est plus rapide en utilisant la mesure de puissance consommée (par le moteur ou par la pompe) et le débit de cette pompe que par une mesure de pression directe. Par ailleurs, la combinaison de :

- l'estimation de pression via la puissance consommée corrélée au débit ; et de
- la mesure directe de pression par capteur peut être avantageuse pour avoir une redondance de détection d'arrêt d'arrosage.

Dans l'exemple de la figure 1, le moteur M est électrique et le paramètre représentatif de la puissance mécanique Pw consommée par la pompe est la puissance électrique consommée Pw par le moteur.

L'évaluation de la pression de sortie de fluide par l'observation de la puissance électrique consommée PW peut soit permettre de se passer d'un capteur de mesure de pression C ce qui est particulièrement économique, soit permettre une redondance de la mesure avec le capteur C.

Dans un mode préférentiel, la machine d'usinage qui est adaptée à réaliser différents types d'opérations d'usinage générant chacune son propre effort de coupe maximum, on fait en sorte de choisir la première consigne de débit D dans une plage de valeurs de consigne allant d'une valeur de consigne minimale à une valeur de consigne maximale, cette plage comportant plusieurs valeurs distinctes entre ces valeurs de consignes minimale et maximale. Dans ce mode de réalisation le choix de la valeur de la première consigne de débit D est réalisé en fonction du type d'opération d'usinage en cours.

Ce mode de réalisation permet de choisir la valeur de la première consigne de débit parmi plusieurs valeurs en fonction du type d'opération d'usinage en cours. On ajuste ainsi le niveau d'effort F du jet en fonction du type de copeau à casser. On peut ainsi limiter l'effort d'impact du jet au juste nécessaire et réduire l'usure de la buse et l'usure du dispositif d'arrosage.

Afin de permettre cette adaptation de la consigne de pression au type d'opération d'usinage, le procédé de lubrification comprend une étape de génération d'un programme d'usinage. Ce programme d'usinage comporte des commandes de mise en oeuvre de différents types d'opérations d'usinage et des paramètres représentatifs des valeurs de la première consigne de débit D associés à certains au moins des types d'opérations d'usinage.

Typiquement une commande de mise en oeuvre d'un type d'opération d'usinage est une commande regroupant :

- un ordre de déplacement de l'outil selon une trajectoire donnée de déplacement,
- un ordre de vitesse de déplacement de l'outil le long de cette trajectoire ; et
- une donnée représentative d'une valeur à donner à la première consigne de débit durant cette opération d'usinage.

Cette donnée représentative de la valeur à donner à la première consigne de débit D peut être exprimée sous la forme d'une pression P ou sous la forme d'un effort d'impact Fth de fluide souhaité en sortie de buse.

Le programmeur peut ainsi choisir dès le moment de la programmation l'effort d'impact F que devra générer le jet de fluide en sortie de buse et l'associer dans le programme à l'opération d'usinage souhaitée. Dans ce mode de réalisation, la machine d'usinage comporte un processeur adapté à commander les mouvements de l'outil et le dispositif d'arrosage en fonction du programme d'usinage. Ce processeur est adapté à déterminer la première consigne de débit D et le premier seuil de pression Ps1 en fonction :

- des données (F ou D) du programme représentatives des valeurs à donner à la première consigne de débit durant les opérations d'usinage ; et
- de caractéristiques physiques de la buse, dont au moins une section de passage courante de buse S.

L'opérateur après qu'il ait installé le porte outil 8, l'outil 2 et la buse adéquate 6 sur le dispositif d'arrosage 1 enregistre la section courante de passage S dans une mémoire reliée au processeur.

Le processeur met alors en oeuvre le procédé de l'invention et calcule les différentes premières consignes de débit D et les différents premiers seuils de pression d'arrosage à appliquer pour chacune des opérations d'usinage programmées.

Le processeur peut aussi conduire un test de la buse, selon le procédé de l'invention, afin d'estimer la section courante de passage S de la buse. Puis dans un second temps, le processeur peut calculer des premières consignes de débit et les premiers seuils de pression d'arrosage en fonction de la section de passage S qu'il aura estimée.

La mise en oeuvre du procédé selon l'invention est illustrée par l'exemple suivant :

- on cherche à générer un effort de 52 N sur le copeau avec une buse de 1.7 mm de diamètre soit une section de passage S (en mm$^2$) = n*1.7$^2$/4 ;
- on trouve alors dans l'extrait de la base de données B de la figure 3 que pour générer un tel effort de 52N avec une buse de diamètre 1.7 mm, il faut générer une pression P d'alimentation de la buse de 230 Bar avec un débit Q de 19.91/min ;
- on fixe alors la consigne de débit D à 19.9 1/min (la consigne de débit constant D est ici égale à la valeur de débit Q du couple de valeurs P et Q donné par la base B : D=Q) et le premier seuil de pression Ps1 à 230 Bars (Ps1 est choisi égal à la valeur de pression P du couple de valeurs donnée par la base B : Ps1=P donnée par la base) ;
- d'après la base B on sait que pour une buse de 1.7 mm avec un couple de valeurs : Q=19.91/min et P=230 Bar on doit théoriquement alimenter le moteur électrique d'entraînement de la pompe avec une puissance électrique Pw de 8.5KW ;
- après un moment d'arrosage à débit constant D1=D, c'est-à-dire en conservant la consigne de débit D constante on constate qu'alors que le débit constant est toujours d'environ 19.9 1/min alors que la pression est passée à 180 Bar ;
- à l'aide de la base de données B, on déduit alors qu'avec une pression de 180 Bar et un débit d'environ 19.9 1/min, le diamètre de buse correspondant devrait être de 1.8 mm (avec une buse de diamètre Dia = 1.8 mm et une pression de 180 Bar on trouve le débit Q = 19.71/min qui est proche de 19.9 1/min) ; On en déduit que sous l'effet de l'usure, la section de passage de la buse est passée d'un diamètre de 1.7 mm à un diamètre de 1.8 mm ;
- comme on cherche toujours à générer un effort de 52 N en sortie de buse, on recalcule, toujours avec la base B, le nouveau couple de valeurs de débit Q et pression P à générer pour avoir Fth= 52N avec une buse de 1.8mm ; La valeur la plus approchante dans la base est 52N avec une buse de 1.8 mm est Fth=51.2N ce qui correspond au couple de valeurs pression P = 200 Bar et débit Q = 20.8L/ min. La nouvelle puissance électrique théorique à générer pour ce couple de valeurs avec la buse de 1.8mm est de Pw = 7.7KW au lieu des 8.5KW qui étaient à générer avec une buse de 1.7 mm.
- on fixe alors une nouvelle consigne de débit D = Q = 20.8L/Min et on fixe le premier seuil de pression prédéterminé Ps1 = 200 Bar (Ps1 = valeur issue de la base B), et on fixe Ps2 = Ps1-40 Bar = 160 Bar et Ps3=Ps1+40 Bar =240 Bar.

Puis on régule le moteur pour que la pompe délivre le fluide avec un débit D1 le plus proche possible de la nouvelle consigne D = Q. On observe la pression courante P dans le circuit (via une mesure de pression par capteur de pression et/ou par une mesure de puissance consommée par le moteur corrélée au débit).

Si la pression passe sous le seuil prédéterminé Ps1 de 160 Bar, on génère alors une alarme de buse usée Alarm1. La surveillance de la chute de la pression courante est ici réalisée via le capteur de pression implanté entre la pompe et la buse.

Si la pression courante passe le seuil de 240 Bar, alors on génère l'alarme d'obstruction de buse Alarm 2.

La surveillance de l'augmentation de pression est ici réalisée via une corrélation :

- de la puissance consommée par le moteur entraînant la pompe ; et
- du débit courant D1.

Ainsi, grâce au procédé selon l'invention, la force d'impact F sur le copeau peut être ajustée selon l'opération d'usinage en cours tout en prenant en compte la section courante de la buse. Le procédé réduit ainsi le risque d'arrêt machine et de disfonctionnement du dispositif d'arrosage.

On note que le procédé selon l'invention est utilisable pour l'arrosage d'outils de coupe, lors d'opérations d'usinage telles que du fraisage mais aussi lors d'opérations d'ébavurage.

**Revendications**

1.  Procédé de commande d'un dispositif d'arrosage (1) d'outil de coupe (2) pour machine d'usinage (3) dotée d'un tel outil (2), le dispositif d'arrosage (1) comportant :

    - une réserve de fluide d'usinage (4) ;
    - une pompe (5) reliée à la réserve (4) ;
    - un moteur d'entraînement (M) de la pompe (5) ;
    - une buse d'arrosage (6) de l'outil ;
    - au moins une conduite de transfert (7) de fluide d'usinage reliant la pompe (5) à une entrée de la buse (6a) ;
    le procédé étant **caractérisé en ce qu'**il comporte les étapes de :
    - commander le moteur (M) d'entraînement de la pompe (5) de manière que la pompe (5) alimente la buse (6) avec un débit de fluide d'usinage constant (D1) et égal à une première consigne de débit (D) ; et
    - mesurer un paramètre représentatif (P) d'une pression de sortie du fluide au niveau de la buse (6) ;
    - comparer une pression de sortie estimée (Pestim) à l'aide du paramètre (P) à un premier seuil de pression prédéterminé (Ps1), et commander le moteur (M) de manière à augmenter le débit de fluide (D1) fourni par la pompe (5) si la pression de sortie estimée descend sous le premier seuil de pression (Ps1).

**2.** Procédé selon la revendication 1, comprenant l'étape de comparer la pression de sortie estimée (Pestim) à l'aide du paramètre à un deuxième seuil de pression prédéterminé (Ps2) et générer une alarme d'indication de buse usée (Alarm1) si la pression de sortie estimée (Pestim) descend en dessous du deuxième seuil de pression prédéterminé (Ps2).

**3.** Procédé selon la revendication 1, comprenant l'étape de comparer la pression de sortie estimée (Pestim) à l'aide du paramètre (P) à un troisième seuil de pression prédéterminé (Ps3) et générer une alarme d'indication d'obstruction de buse (Alarm2) si la pression de sortie estimée (Pestim) passe au dessus du troisième seuil de pression prédéterminé (Ps3).

**4.** Procédé selon la revendication 1, comprenant une étape de détermination de la première consigne de débit D à l'aide d'une base de données (B) recensant pour plusieurs sections de passage (S) de buse données des couples de valeurs de pression (P) et de débit (Q) de fluide d'arrosage nécessaires pour générer un niveau théorique d'effort d'impact (Fth) de jet de fluide donné en sortie de la buse (6).

**5.** Procédé selon la revendication 4, dans lequel la base de données (B) est une base de données générées lors d'essais successifs du dispositif d'arrosage (1) d'outil de coupe, la base de données (B) comportant plusieurs valeurs mesurées de débits de fluide d'arrosage (Q), et pour chaque valeur de débit mesurée (Q) de la base de données, la base de données comportant une section de passage de buse associée (S) et une valeur de pression mesurée associée (P).

**6.** Procédé selon l'une des revendications 4 ou 5, dans lequel pour déterminer l'augmentation du débit de fluide à appliquer (D) lorsque la pression de sortie estimée (Pestim) descend sous le premier seuil de pression (Ps1) :

    a) on évalue une section minimale courante (S) de passage de fluide au travers de la buse à l'aide :

        - de la base de données (B) ; et
        - en fonction de valeurs estimées de débit courant (D1) de fluide délivré par la pompe (5) et de pression courante de sortie de fluide (Pestim) ; puis

    b) on détermine en fonction de cette section minimale courante (S) de passage de fluide ainsi évaluée, un couple idéal de valeurs de pression (P) et de débit (Q) devant être fournis par la pompe (5) pour générer un niveau théorique d'effort d'impact (Fth) de jet de fluide supérieur à un seuil d'impact minimum prédéterminé ; puis
    c) on affecte à la première consigne de débit (D) une nouvelle valeur fonction de la valeur de débit (Q) du couple idéal déterminé.

**7.** Procédé selon la revendication 1, dans lequel pour commander le moteur (M) de manière que la pompe (5) alimente la buse (6) avec un débit de fluide d'usinage constant (D), on fait en sorte que la pompe soit une pompe à valeur de cylindrée constante et on évalue le débit de fluide d'usinage (D1) effectivement délivré par cette pompe à l'aide d'un tachymètre mesurant le nombre de cycles de la pompe (5) sur une période de temps donnée et en multipliant la valeur de cylindrée de la pompe par le nombre de cycles mesuré à l'aide du tachymètre.

**8.** Procédé selon la revendication 1, dans lequel le paramètre mesuré pour estimer la pression de sortie (Pestim) du fluide au niveau de la buse est un paramètre (Pw) représentatif de la puissance mécanique consommée par la pompe pour l'alimentation de la buse avec le débit de fluide d'usinage constant (D).

**9.** Procédé selon la revendication 8, dans lequel le moteur (M) est un moteur électrique et le paramètre représentatif de la puissance mécanique consommée par la pompe pour alimenter la buse avec le débit de fluide d'usinage constant est une puissance électrique consommée (PW) par le moteur.

**10.** Procédé selon la revendication 1, dans lequel la machine d'usinage est adaptée à réaliser différents types d'opérations d'usinage générant chacune son propre effort de coupe maximum et dans lequel la première consigne de débit (D) est choisie dans plage de valeurs de consigne allant d'une valeur de consigne minimale à une valeur de consigne maximale, cette plage comportant plusieurs valeurs distinctes entre ces valeurs de consignes minimale et maximale et le choix de la valeur de la première consigne de débit (D) étant en fonction du type d'opération d'usinage en cours.

**Patentansprüche**

**1.** Steuerverfahren zur Steuerung einer Sprüheinrichtung (1) zum Besprühen eines Schneidewerkzeugs (2) für eine Bearbeitungsmaschine (3), die mit einem solchen Werkzeug (2) versehen ist, wobei die Sprüheinrichtung (1) umfasst:

    - einen Vorratsbehälter für das Bearbeitungsfluid (4);
    - eine mit dem Vorratsbehälter (4) verbundene Pumpe (5);
    - einen Antriebsmotor (M) für die Pumpe (5);

- eine Sprühdüse (6) zum Besprühen des Werkzeugs;
- mindestens eine Förderleitung (7) zum Fördern von Bearbeitungsfluid, welche die Pumpe (5) mit einem Eingang der Düse (6a) verbindet; wobei das Verfahren **dadurch gekennzeichnet ist, dass** es die folgenden Schritte umfasst.
- Steuern des Antriebsmotors (M) zum Antreiben der Pumpe (5) derart, dass die Pumpe (5) die Düse (6) mit einem Durchfluss von Bearbeitungsfluid (D1) speist, der konstant ist und einem ersten Durchfluss-Sollwert (D) entspricht; und
- Messen eines repräsentativen Parameters (P) für eines Ausgangsdrucks des Fluids in Höhe der Düse (6);
- Vergleichen eines mit Hilfe des Parameters (P) ermittelten Ausgangsdrucks (Pestim) mit einer vorbestimmten ersten Druckschwelle (Ps1) und Steuern des Motors (M) derart, dass die Durchflussrate des von der Pumpe (5) gelieferten Fluids (D1) erhöht wird, wenn der ermittelte Ausgangsdruck unter die erste Druckschwelle (Ps1) sinkt.

2. Verfahren nach Anspruch 1, umfassend den Schritt, den mit Hilfe des Parameters ermittelten Ausgangsdruck (Pestim) mit einer zweiten vorgegebenen Druckschwelle (Ps2) zu vergleichen und ein Alarmsignal für die verwendete Düse (Alarm 1) auszulösen, wenn der ermittelte Ausgangsdruck (Pestim) unter die zweite vorgegebene Druckschwelle (Ps2) sinkt.

3. Verfahren nach Anspruch 1, umfassend den Schritt, den mit Hilfe des Parameters (P) ermittelten Ausgangsdruck (Pestim) mit einer dritten vorgegebenen Druckschwelle (Ps3) zu vergleichen und ein Alarmsignal für eine Obstruktion der Düse (Alarm2) auszulösen, wenn der ermittelte Ausgangsdruck (Pestim) über die dritte vorgegebene Druckschwelle (Ps3) steigt.

4. Verfahren nach Anspruch 1, umfassend einen Schritt, den ersten Durchfluss-Sollwert D mit Hilfe einer Datenbank (B) zu ermitteln, die für mehrere Durchflussquerschnitte (S) der Düse Daten für die Wertepaare des Druckes (P) und des Fluid-Durchflusses (Q) erfasst, die benötigt werden, um ein theoretisches Niveau für die Auftreffkraft (Fth) des gegebenen Fluidstrahls am Ausgang der Düse (6) zu erzeugen.

5. Verfahren nach Anspruch 4, bei dem die Datenbank (B) eine Datenbank ist, deren Daten bei erfolgreichen Versuchen der Sprühvorrichtung (1) zum Besprühen des Schneidwerkzeugs erfasst werden, wobei die Datenbank (B) mehrere gemessene Werte für den Durchfluss des Sprühfluids (Q) umfasst und wobei die Datenbank für jeden gemessenen Durchflusswert (Q) einen Durchflussquerschnitt der zugehörigen Düse (S) und einen gemessenen zugehörigen Druckwerts (P) umfasst.

6. Verfahren nach einem der Ansprüche 4 oder 5, bei dem zur Bestimmung der Erhöhung des anzuwenden Fluid-Durchflusses (D), wenn der ermittelte Ausgangsdruck (Pestim) unter die erste Druckschwelle (Ps1) fällt, folgendes gilt:

   a) Berechnen eines aktuellen minimalen Querschnitts (S) des Fluid-Durchflusses durch die Düse mit Hilfe von:

   - der Datenbank (B); und
   - in Abhängigkeit der aktuellen ermittelten Durchfluss-Werte (D1) des durch die Pumpe (5) gelieferten Fluids und des aktuellen Ausgangsdrucks des Fluids (Pestim); dann

   b) Bestimmen in Abhängigkeit dieses aktuellen minimalen Querschnitts (S) des auf diese Weise berechneten Fluid-Durchflusses ein ideales Wertepaar für die Werte des Druckes (P) und des Durchflusses (Q), die von der Pumpe (5) geliefert werden sollten, um ein theoretisches Niveau für die Auftreffkraft (Fth) des Fluidstrahls zu erzeugen, das über einem vorgegebenen minimalen Wirkungsschwellenwert liegt; dann
   c) Bestimmen eines neuen Wertes für den ersten Durchfluss-Sollwert (D) in Abhängigkeit des Durchfluss-Wertes (Q) des ermittelten idealen Wertepaares.

7. Verfahren nach Anspruch 1, bei dem zur Steuerung des Motors (M) derart, dass die Pumpe (5) die Düse (6) mit einem konstanten Durchfluss an Bearbeitungsfluid (D) versorgt, man eine Pumpe mit einem konstanten Hubraumwert wählt und man den Sollwert für das tatsächlich durch diese Pumpe gelieferte Bearbeitungsfluid (D1) mit Hilfe eines Drehzahlmessers berechnet, der die Drehzahl der Pumpe (5) über einen vorgegebenen Zeitraum misst, und indem man den Hubraumwert der Pumpe mit der mit Hilfe des Drehzahlmessers gemessenen Drehzahl multipliziert.

8. Verfahren nach Anspruch 1, bei dem der Parameter, der gemessen wird, um den Ausgangsdruck (Pestim) des Fluids in Höhe der Düse zu ermitteln ein Parameter (Pw) ist, der repräsentativ für die durch die Pumpe aufgenommene mechanische Leistung zum Speisen der Düse mit dem konstanten Durchfluss an Bearbeitungsfluid (D) ist.

9. Verfahren nach Anspruch 8, bei dem der Motor (M) ein Elektromotor und der repräsentative Parameter für die durch die Pumpe aufgenommene mechanische Leistung zum Speisen der Düse mit dem konstanten Durchfluss an Bearbeitungsfluid eine durch den Motor aufgenommene elektrische Energie (PW) ist.

10. Verfahren nach Anspruch 1, bei dem die Bearbeitungsmaschine so adaptiert ist, dass unterschiedliche Bearbeitungsarten ausgeführt werden können, wobei für jede Bearbeitungsart jeweils die geeignete maximale Schneidleistung erzeugt wird, und bei dem der erste Durchfluss-Sollwert (D) im Bereich von Sollwerten gewählt wird, die von einem minimalen Sollwert zu einem maximalen Sollwert gehen, wobei dieser Bereich zwischen diesen minimalen und maximalen Sollwerten mehrere unterschiedliche Werte umfasst und die Wahl des Wertes für den ersten Durchfluss-Sollwert (D) abhängig von der laufenden Bearbeitungsart ist,

**Claims**

1. A method of controlling a cooling device (1) for cooling a cutting tool (2) for a machine tool (3) fitted with such a cutting tool (2), the cooling device (1) comprising:

    • a supply of machining fluid (4);
    • a pump (5) connected to the supply (4);
    • a drive motor (M) for driving the pump (5);
    • a cooling nozzle (6) for cooling the tool; and
    • at least one machining fluid transfer duct (7) connecting the pump (5) to an input (6a) of the nozzle;
    the method being **characterized in that** it comprises the steps of:
    • controlling the motor (M) to drive the pump (5) in such a manner that the pump (5) feeds the nozzle (6) with machining fluid at a constant flow rate (D1) that is equal to a first flow rate setpoint (D) ;
    • measuring a parameter (P) representative of a fluid outlet pressure from the nozzle (6); and
    • comparing an estimated outlet pressure (Pestim) as estimated from the parameter (P) with a first predetermined pressure threshold (Ps1), and controlling the motor (M) so as to increase the fluid flow rate (D1) as delivered by the pump (5) if the estimated output pressure drops below the first pressure threshold (Ps1).

2. A method according to claim 1, including the step of comparing the outlet pressure (Pestim) as estimated from the parameter with a second predetermined pressure threshold (Ps2), and generating a worn nozzle alarm (Alarm1) if the estimated outlet pressure (Pestim) drops below the second predetermined pressure threshold (Ps2).

3. A method according to claim 1, including the step of comparing the outlet pressure (Pestim) as estimated from the parameter (P) with a third predetermined pressure threshold (Ps3), and generating a clogged nozzle alarm (Alarm2) if the estimated outlet pressure (Pestim) drops below the third predetermined pressure threshold (Ps3).

4. A method according to claim 1, including a step of determining the first flow rate setpoint (D) from a database (B) that contains, for a plurality of given nozzle flow sections (S), pairs of pressure and flow rate values (P, Q) for the cooling fluid necessary for generating a given theoretical level of fluid jet impact force (Fth) at the outlet from the nozzle (6).

5. A method according to claim 4, wherein the database (B) is a database generated during successive tests of the cutting tool cooling device (1), the database (B) including a plurality of measured values for the cooling fluid flow rate (Q), and for each measured flow rate value (Q) in the database, the database including an associated nozzle flow section (S) and an associated measured pressure value (P).

6. A method according to claim 4 or claim 5, wherein, in order to determine the increase in fluid flow rate (D) that should be applied when the estimated outlet pressure (Pestim) drops below the first pressure threshold (Ps1), the following steps are performed:

    a) evaluating a present minimum fluid flow section (S) through the nozzle using:

        • the database (B); and
        • estimated values of the present flow rate (D1) of fluid being delivered by the pump (5) and the present fluid outlet pressure (Pestim); and then

    b) as a function of this present minimum fluid flow section (S) as evaluated in this way, determining an ideal pair of pressure and flow rate values (P, Q) to be delivered by the pump (5) in order to generate a theoretical fluid jet impact force level (Fth) that is greater than a predetermined minimum impact threshold; and then
    c) giving the first flow rate setpoint (D) a new value as a function of the flow rate value (Q) of the ideal pair as determined in this way.

7. A method according to claim 1, wherein, in order to control the motor (M) in such a manner that the pump (5) feeds the nozzle (6) with machining fluid at a constant flow rate (D), it is ensured that the pump is a pump having a constant cylinder capacity and the machining fluid flow rate (D1) as actually delivered by said pump is evaluated using a tachometer that measures the number of cycles of the pump (5) over a given time period, and by multiplying the cylinder capacity of the pump by the number of cycles as measured by the tachometer.

8. A method according to claim 1, wherein the parameter that is measured in order to estimate the outlet pressure (Pestim) of the fluid from the nozzle is a parameter (Pw) representative of the mechanical power consumed by the pump in order to feed the nozzle with the machining fluid at the constant flow rate (D).

9. A method according to claim 8, wherein the motor (M) is an electric motor and the parameter representative of the mechanical power consumed by the pump in order to feed the nozzle with the machining fluid at the constant flow rate is a value for the electric power (Pw) consumed by the motor.

10. A method according to claim 1, wherein the machine tool is adapted to perform various types of machining operation, each generating its own maximum cutting force, and wherein the first flow rate setpoint (D) is selected from a range of setpoint values going from a minimum setpoint value to a maximum setpoint value, said range comprising a plurality of distinct values between said minimum and maximum setpoint values, and the value selected for the first flow rate setpoint (D) being selected as a function of the ongoing type of machining operation.

## Fig.1

Si Pestim < Ps2 => Alarm 1
Si Pestim > Ps3 => Alarm 2

$P_{s1}$

Pestim

+ -

1 — D

3

12 — Pw

M

10 — D1

6 — F

6b

6a

7

11

P

C

5

4

8

7

2 — F

6b

## Fig.2

| Alarm1 | Prealarme | OK | Prealarme | Alarm2 |
|---|---|---|---|---|
| **Effort impact :Fth** | | | | |
| <80N | >80N et <90N | >90N | <110N ⇔ < 18.5KW | <110N ⇔ >18.5KW |
| **Pression estim = f(P)** | | | | |
| $\underline{Ps2}= P_{s1}$ -40bar | $P_{s1}$ -20bar | $\underline{Ps1}$ | $P_{s1}$ +20bar | $\underline{Ps3}= P_{s1}$ +40bar |

# Fig.3

S=Dia² /4

D   B   Pw

| DIA BUSE | PRESSION en Bar P 170 | | | PRESSION en Bar P 180 | | | PRESSION en Bar P 200 | | | PRESSION en Bar P 230 | | | PRESSION en Bar P 240 | | |
|---|---|---|---|---|---|---|---|---|---|---|---|---|---|---|---|
| | Q en l/min | Fth en N | POWER en KW | Q en l/min | Fth en N | POWER en KW | Q en l/min | Fth en N | POWER en KW | Q en l/min | Fth en N | POWER en KW | Q en l/min | Fth en N | POWER en KW |
| 1 | 5,9 | 13,4 | 1,9 | 6,1 | 14,2 | 2,0 | 6,4 | 15,8 | 2,4 | 6,9 | 18,2 | 2,9 | 7,0 | 19,0 | 3,1 |
| 1,1 | 7,2 | 16,3 | 2,3 | 7,4 | 17,2 | 2,5 | 7,8 | 19,1 | 2,9 | 8,3 | 22,0 | 3,5 | 8,5 | 22,9 | 3,8 |
| 1,2 | 8,5 | 19,3 | 2,7 | 8,8 | 20,5 | 2,9 | 9,2 | 22,8 | 3,4 | 9,9 | 26,2 | 4,2 | 10,1 | 27,3 | 4,5 |
| 1,3 | 10,0 | 22,7 | 3,1 | 10,3 | 24,0 | 3,4 | 10,9 | 26,7 | 4,0 | 11,6 | 30,7 | 5,0 | 11,9 | 32,0 | 5,3 |
| 1,4 | 11,6 | 26,3 | 3,6 | 11,9 | 27,9 | 4,0 | 12,6 | 31,0 | 4,7 | 13,5 | 35,6 | 5,7 | 13,8 | 37,2 | 6,1 |
| 1,5 | 13,3 | 30,2 | 4,2 | 13,7 | 32,0 | 4,6 | 14,4 | 35,6 | 5,3 | 15,5 | 40,9 | 6,6 | 15,8 | 42,7 | 7,0 |
| 1,6 | 15,2 | 34,5 | 4,8 | 15,6 | 36,4 | 5,2 | 16,4 | 40,4 | 6,1 | 17,6 | 46,5 | 7,5 | 18,0 | 48,5 | 8,0 |
| 1,7 | 17,1 | 38,8 | 5,4 | 17,6 | 41,1 | 5,9 | 18,6 | 45,7 | 6,9 | 19,9 | 52,5 | 8,5 | 20,3 | 54,8 | 9,0 |
| 1,8 | 19,2 | 43,5 | 6,0 | 19,7 | 46,1 | 6,6 | 20,8 | 51,2 | 7,7 | 22,3 | 58,9 | 9,5 | 22,8 | 61,4 | 10,1 |
| 1,9 | 21,4 | 48,5 | 6,7 | 22,0 | 51,3 | 7,3 | 23,2 | 57,0 | 8,6 | 24,9 | 65,6 | 10,6 | 25,4 | 68,4 | 11,3 |
| 2 | 23,7 | 53,7 | 7,4 | 24,4 | 56,9 | 8,1 | 25,7 | 63,2 | 9,5 | 27,5 | 72,7 | 11,7 | 28,1 | 75,8 | 12,5 |
| 2,1 | 26,1 | 59,2 | 8,2 | 26,9 | 62,7 | 8,9 | 28,3 | 69,7 | 10,5 | 30,4 | 80,1 | 12,9 | 31,0 | 83,6 | 13,8 |
| 2,2 | 28,7 | 65,0 | 9,0 | 29,5 | 68,8 | 9,8 | 31,1 | 76,5 | 11,5 | 33,3 | 87,9 | 14,2 | 34,0 | 91,8 | 15,1 |
| 2,3 | 31,3 | 71,0 | 9,8 | 32,2 | 75,2 | 10,7 | 34,0 | 83,6 | 12,6 | 36,4 | 96,1 | 15,5 | 37,2 | 100,3 | 16,5 |
| 2,4 | 34,1 | 77,4 | 10,7 | 35,1 | 81,9 | 11,7 | 37,0 | 91,0 | 13,7 | 39,7 | 104,7 | 16,9 | 40,5 | 109,2 | 18,0 |
| 2,5 | 37,0 | 83,9 | 11,6 | 38,1 | 88,9 | 12,7 | 40,1 | 98,9 | 14,8 | 43,0 | 113,6 | 18,3 | 44,0 | 118,5 | 19,5 |
| 2,6 | 40,0 | 90,8 | 12,6 | 41,2 | 96,1 | 13,7 | 43,4 | 106,8 | 16,1 | 46,5 | 122,8 | 19,8 | 47,5 | 128,2 | 21,1 |
| 2,7 | 43,2 | 97,9 | 13,6 | 44,4 | 103,7 | 14,8 | 46,8 | 115,2 | 17,3 | 50,2 | 132,5 | 21,4 | 51,3 | 138,2 | 22,8 |
| 2,8 | 46,4 | 105,3 | 14,6 | 47,8 | 111,5 | 15,9 | 50,3 | 123,9 | 18,6 | 54,0 | 142,5 | 23,0 | 55,1 | 148,6 | 24,5 |
| 2,9 | 49,8 | 112,9 | 15,7 | 51,2 | 119,6 | 17,1 | 54,0 | 132,9 | 20,0 | 57,9 | 152,8 | 24,6 | 59,2 | 159,5 | 26,3 |
| 3 | 53,3 | 120,9 | 16,8 | 54,8 | 128,0 | 18,3 | 57,88 | 142,2 | 21,4 | 62,0 | 163,5 | 26,4 | 63,3 | 170,6 | 28,1 |

EP 2 502 700 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 62130149 B